# EUROPEAN PATENT SPECIFICATION

(11) **EP 0 437 712 B1**
(45) Date of publication and mention of the grant of the patent: **02.04.1997**
(21) Application number: 90122942.7
(22) Date of filing: 30.11.1990
(51) Int. Cl.: G06F 12/08

(54) **Tandem cache memory**
Tandem-Cache-Speicher
Antémémoire tandem

(30) Priority: 18.01.1990 IT 1909190
(43) Date of publication of application: 24.07.1991
(73) Proprietor: BULL HN INFORMATION SYSTEMS ITALIA S.p.A., 10014 Caluso (Torino) (IT)
(72) Inventor: Zulian, Ferruccio, I-20010 Cornaredo (MI) (IT)
(74) Representative: Falcetti, Carlo

(56) References cited:
- EP-A- 0 173 893
- EP-A- 0 293 720
- US-A- 4 442 488
- IBM TECHNICAL DISCLOSURE BULLETIN. vol. 31, no. 3, August 1988, NEW YORK US pages 303 - 306; 'High Performance Microprocessor Memory System '

## Description

The present invention relates to a tandem cache memory that is a cache memory comprising two cache memories which operate in parallel and support each other with the purpose of a fast servicing of information requests issued by a processor.

It is known that in the modern data processing systems and in order to increase performance, essentially limited by the "bottleneck" of the access time to a working memory through a system bus, buffer memories or "caches" are used, each coupled to a processor in the system. Each cache stores information most recently used by the related processor and provides such information on processor request, without need of access to the system bus.

Multiple caches are also used to improve their efficiency. Each is intended for storing a particular kind of information.

In particular it is known to use a pair of caches respectively for storing data and instruction, as well as the use of hierarchical caches.

In the present status of the art two kinds of caches may be distinguished:
- caches for storing most recently used, independent information blocks,
- caches for storing sequential information blocks, which are expected to be used.

The caches of the first kind essentially comprise a "directory" or a list of block addresses and a memory storing the information blocks whose address is listed in the directory.

The address of the block is the address field common to all addresses of the information items in the block.

The information items in the same block are "contiguous" in the sense that their addresses differ in the least significant address bits only (their number depending on the block size) but the addresses of the several blocks are completely independent each from the other.

The operation of the first kind caches is well known:

When a processor requests an information at a given address, the address is compared with the addresses stored in the cache directory.

If it coincides with one of such addresses, the requested information is stored in the cache and can be read out therefrom.

Otherwise the cache requests an information block containing the information to the working memory (through the system bus).

Once the block is stored in the cache, the cache provides the requested information to the processing unit, with a delay or latency time corresponding to the time required to read the whole block or, in the best case (for very elaborated caches) to the time required to read the block portion preceding and containing the requested information.

In any event, even if the requested information is provided to the processor as soon as available in the cache, the cache cannot be further used by the processor and is "latent" for the whole time needed to load the whole block.

The latency time may be further aggravated if the block loading must be preceded by a "replacement" operation, that is by the saving of the information stored in some zone of the cache in the working memory to give place in the cache to the new information block.

The first kind caches, in spite of the above mentioned limitations offers the remarkable advantage that, as long as the requested information is contained in the cache, it may be supplied to the processor in a fast way and an unlimited number of times, independently of the order in which information items are requested.

The cache of the second kind operate in a different way.

They have a capacity limited to few blocks, generally two or four) referenced by stricly sequential addresses, in increasing order.

A cache of this kind is for instance described in the european publication EP-A-0293720.

According to such publication, if an information is requested which is not contained in the cache, the cache is loaded with the block containing the requested information and with the next following ordered block. The requested information is provided to the requesting processor as soon as available.

If the requested information is in a block already contained in the cache, but the next following block is not stored in the cache, the cache provides the requested information to the requesting processor without delay.

In addition the cache fetches the next following block from working memory and stores it.

Therefore as long as the information items subsequently requested are ordered at consecutive and increasing addresses they are quickly provided by the cache, which has already obtained them from the working memory, with "prefetching" operations.

This advantage is obviously lost in case of "jumps".

Additionally in case the same information is subsequently requested, it must be read out again from the working memory with a consequent occupation of the resources (working memory and sytems bus).

The document IBM TECHNICAL DISCLOSURE BULLETIN, Vol 31 no 3, August 1988, New York, pages 303-306: "High perrformance microprocessor memory system" discloses a prefetching unit similar to the caches of the second kind which can be advantageously used in combination with a microprocessor cache system of the first kind.

The prefetch unit and the microprocessor cache, from an architectural standpoint woul be cascade connected or structured in a hierarchy as previosly mentioned: the first kind one would be connected between the microprocessor and the system bus, the second kind one would be connected between the system bus and the memory.

As a result, whenever a MISS occurs in the first kind cache, a memory read request would be sent through the system bus to the memory system and, if the requested information is available in the second kind cache, it would be sent to the microprocessor and to the the first kind cache much faster than if it would be originally read from the memory into the prefetch unit.

However system bus access is required with possible contention and related latency time, and a relatively long transfer delay due to the system bus would always be involved.

In addition, in case of a multiprocessor system or even in case where units have direct memory access the sequential prefetching provided by the prefetching unit would not offer any substantive advantage, because memory accesses from the several processors (or units) are intermingled and sequentiality of addresses in memory accesses is generally lost.

US-A-4,442,488 describes a cache memory system, which combines at some extent the functions of the first kind caches and the second kind caches by division of the cache in a plurality of regions: within each region information is prefetched in sequential order but the information stored in each region is address independent of thge one in the other regions.

The arrangement is very complicated and very often results in a partial exploitation of the full size of the cache, because the regions must have a fixed size, whilst the the information sequences stored therein have a variable lenght, generally shorter than said fixed size.

Moreover, in order to allow the cache to be read even when the cache memory is sequentially loading at subsequent times a plurality of sequential information blocks, the cache memory cycle is splitted in two half cycles during which the cache is respectively read and written. As a consequence the cache is inherently affected by a latency time, which however short is not negligible.

The invention is defined in claim 1.

The present invention overcomes the disadvantages of the kind of caches previously described by providing a cache memory system, in the following referred to as tandem cache, consisting in fact of two caches, coupled to operate in parallel and both located between a processor and the system bus.

A first cache, having a relatively high capacity is organized to store a plurality of independent blocks of information items.

The second cache, is organized to store a limited number of blocks, preferably four, of sequential information items.

The first cache has its address input connected to the address input of the second cache and its information input/output connected to the information output of the second cache.

If a processor requests an information which is not available in either caches, the second cache performs subsequent read operations and fetches the block containing the requested information and the blocks having subsequent addresses in increasing order from working memory, loading them in suitable registers arranged to form a buffer.

As soon as the requested information is available, it is forwarded to the requesting processor and at the same time the block containing it is loaded in the first cache.

The information blocks having subsequent addresses, are not stored in the first cache, with the advantage that the first cache remains free to respond to subsequent requests from the processor.

The latency problem is therefore avoided and the first cache is not filled with information whose subsequent utilization is not certain.

Therefore even the so called "hit ratio" is increased.

If a processor requests an information item which is not contained in the first cache, but is contained in the second one, the second cache immediately provides it and at the same time transfers the block containing the requested information to the first cache.

Further, if a space sufficing to contain a plurality of blocks becomes free in the second cache, as a result of such transfer, a plurality of blocks is read out from the working memory in burst mode and stored in the free space without interference with the operation of the first cache.

If the requested information is available in the first cache, it is supplied to the requesting processor and the second cache remains inactive.

The features and the advantages of the invention will appear more clearly from the following description of a preferred form of embodiment and from the enclosed drawings where:
- Figure 1 shows in block diagram a data processing system including a tandem cache memory in accordance with the invention.
- Figure 2 shows in block diagram the architecture of a tandem cache memory in accordance with the invention.
- Figure 3 and 4 show in logic flow diagram the operation and the states taken by the tandem cache memory of fig. 2 and by its related control logic.

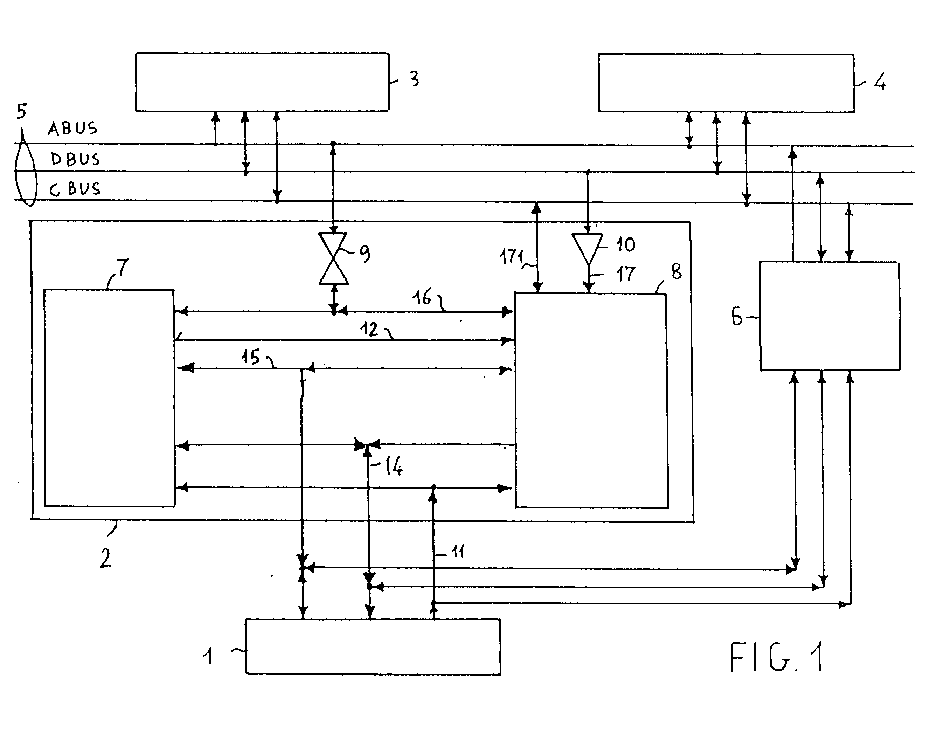

Figure 1 shows in block diagram a data processing system including the tandem cache memory of the present invention.

The system comprises a processor 1, including a memory management unit, the tandem cache memory 2, a working memory 3 and at least an input/output controller I/OC 4.

A system bus 5, comprising a set of leads ABUS for transferring addresses, a set of leads DBUS for transferring data or instructions and a set of leads CBUS for transferring control signals, forms an intercommunication path for processor 1, working memory 3 and I/OC 4. Communication between processor 1 and bus 5, for having access to the working memory, occurs through the cache memory 2.

Preferably but not necessarily, the cache memory 2 is intended for storing instructions only and for fetching them from the working memory.

Data read/write operations in the working memory 3, requested by processor 1, are performed through an interface unit 6, which, in turn, may include a data cache.

In this kind of architecture the tandem cache memory 2 may be implemented in a very simple way and described in an easily understandable manner.

The cache memory 2 comprises a first cache 7, having a relatively high capacity, a second prefetching cache 8 and two sets of logical gates 9,10 for connection to the bus 5.

In particular gates 9 connect caches 7,8 to the address bus ABUS and gates 10 connect cache 8 to the data bus DBUS.

The two caches 7,8 receives reading addresses, generated by processor 1, through a channel 11.

When a hit occurs in cache 7, cache 7 sends a signal HIT asserted to cache 8, through a lead 12.

It further sends the requested instruction to processor 1, through a channel 14 (DATA).

Preferably but not necessarily, channel 14, data bus DBUS and working memory 3 have a 4 bytes parallelism.

Four bytes is also the block size in caches 7,8.

For sake of clearness and simplicity it is further assumed that the instructions consist in four bytes words and are always aligned (that is the two least significant address bits of the instructions are always zero).

In case of miss, cache 7 sends signal HIT deasserted to cache 8.

If the instruction referenced by the read address on channel 11 is stored in cache 8, cache 8 sends the requested information to processor 1, through channel 14.

In addition it controls cache 7, through control lead 15, so as to transfer the same information to cache 7, through channel 14.

Moreover if in cache 8 some space is available for storing a plurality of information blocks, cache 8 generates, on a bidirectional channel 16, the addresses of blocks next following those already stored in cache 8, requests access to the system bus (through control leads 171) and, once obtained it, controls a sequence of memory read operations, in burst mode, loading the received information in the available space.

The information is received through gates 10 and a channel 17.

If the instruction requested by processor 1 is not present in both cache 7 and cache 8, the cache 8 operates as previously described to fetch, from the working memory, the block containing the requested instruction and a plurality of next following ordered blocks.

As soon as the block containing the requested instruction is received by cache 8, it is sent to processor 1 and at the same time loaded in cache 7.

Bidirectional gates 9, suitably controlled by cache 8 for receiving addresses from the system bus, enables the two caches 7,8 to systematically perform "bus watching" operations.

Even if caches 7,8 are intended for storing instructions only, hence information which generally cannot be modified, it is advisable to invalidate the blocks stored in both caches every time the corresponding blocks stored in memory 3 are replaced with other information.

To this purpose cache 8 may detect, through channel 171, if a memory write operation is requested through the system bus.

When this situation occurs, gates 9 are controlled so as to transfer to cache 7 and cache 8 (through channel 16) the write address present on bus 5.

Both caches check if the referenced block i contained therein and in the affirmative they invalidate it.

This operation is known as "bus watching" or "snooping".

Cache 7, considered alone, is well known and conventional.

It does not deserve any further explaination.

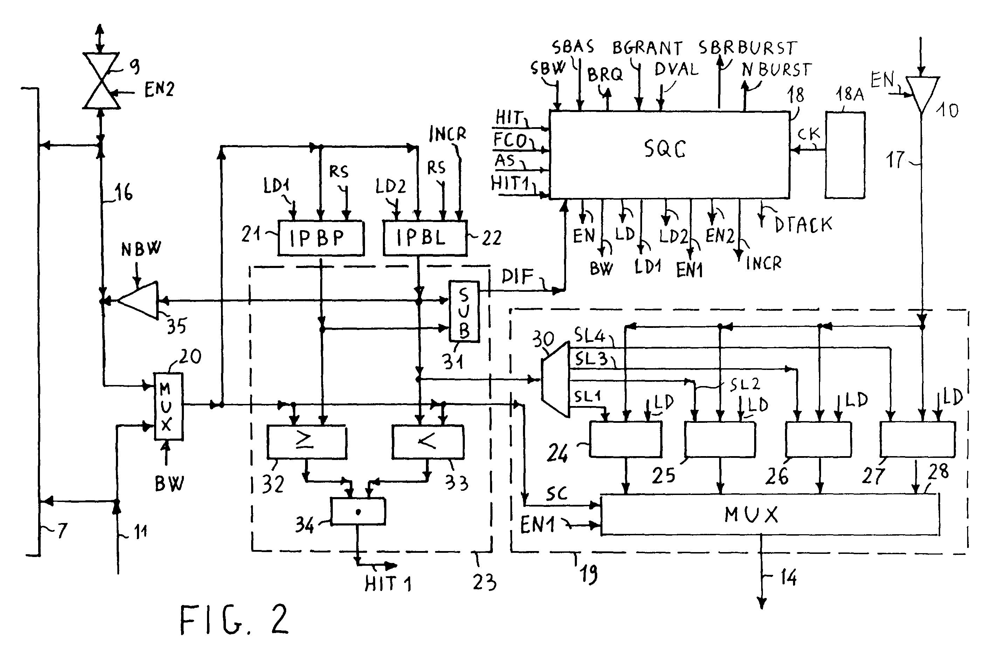

Figure 2 shows in block diagram and in greater detail a preferred embodiment of cache 8.

Cache 8 comprises a logical sequencer SQC 18, which may be implemented as a finite states logical machine, an instruction buffer IPB 19, where a plurality of sequential blocks of instructions may be stored, a register IPBP 21 for storing the address of the first of the blocks which are actually stored in buffer 19, a counter register IPBL 22, an address comparing logic unit 23, a multiplexer 20 and a set of tristate gates 35.

The comparison logic unit 23 comprises an AND gate 34, a subtractor 31 and two comparators 32,33.

Subtractor 31 has the inputs connected to the output of registers 21 and 22.

Comparator 32 has the inputs connected respectively to the output of multiplexer 20 and to the output of register 21.

Comparator 32 output is connected to a first input of AND gate 34.

Comparator 33 has the inputs connected respectively to the output of multiplexer 20 and to the output of counter register 22. Its output is connected to a second input of AND gate 34.

Buffer 19 comprises four register 24,25,26,27, each having 32 bits and the inputs connected to channel 17 (which in turn is connected to data bus of system bus 5, through gates 10), a decoder 30 and a multiplexer 28.

The output of each register is connected to one input of the four input multiplexer 28.

The output of multiplexer 28 is connected to channel 14.

Multiplexer 28 is controlled by a selection code SC consisting in the two least significant bits in output from multiplexer 20.

Code SC enables, in mutually exclusive way, one of the inputs to be connected to the output.

The output of multiplexer 28 is enabled by a signal EN1, generated by sequencer 18.

Decoder 30 has the input connected to the output of counter register 22 and receives the least significant bits of the register 22 output.

Decoder 30 outputs, in mutually exclusive way, one of four selection signals SL1,SL2,SL3,SL4, each enabling the loading of one of the four registers 24,25,26,27.

Loading is controlled by a signal LD generated by sequencer 18.

Multiplexer 20 has a first input set connected to channel 11 and a second input set connected to channel 16.

A signal BW, generated by sequencer 18, enables multiplexer 20 to transfer at its output the information present on channel 16 when "bus watching" detects write operations occurring on the system bus.

The output of multiplexer 20 is connected to the input of the two registers 21,22, besides being connected to an input of comparators 32,33.

Registers 21,22 are respectively controlled by parallel load signals LD1,LD2 and by an initialization reset signal RST.

Register 22 is further controlled by an incrementing control signal INCR.

All these signals are generated by sequencer 18.

The output of counter register 22 is connected to channel 16 through gates 35.

Gates 35 are normally enabled to transfer addresses to channel 16 by signal NBW (BW negated).

For sake of clearness and consistently with the assumption that the instructions are always aligned and coincide with an information block and further the parallelism of the working memory and the data channel is equal to the size of an information block, the addresses present on channel 11 and 16, as well as those at the output of registers 21,22, are block addresses and do not comprise the two least significant address bits which reference a "byte" within the information block.

Thus the two least significant bits of the block address, at the output of multiplexer 20, form the selection code SC and the two least significant bits in output from register 22, and input to decoder 30, form a selection code for writing in one of registers 24,25,26,27.

Subtractor 31 subtracts the contents of register 21 to the contents of register 22 and signals to sequencer 18, by a three bits code DIF what is the difference among the two contents.

Sequencer 18 receives signal HIT from cache 7 and exchanges control signals with the system bus 5. These signals are not detailed because they clearly depend on the system bus protocol, being possible to select any one among several of the standard or non standard protocols known in the art.

Sequencer 18 further receives signal HIT1 from gate 34 and a periodic clock signal CK from an oscillator 18A.

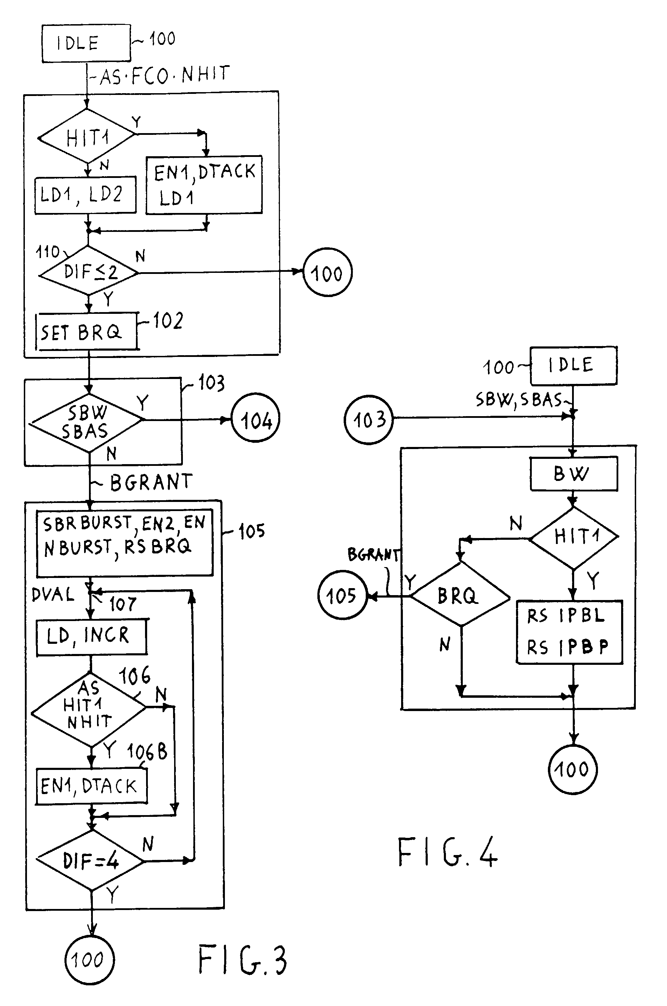

Better than any circuital description, the flow diagrams of Fig.3 and Fig.4 clarify the architecture of sequencer 18 as a finite state machine operating in accordance with predetermined logical flows and enlighten the operation of cache 8.

Cache 8, normally inactive, is triggered by two external events: HIT deasserted by cache 7 joint with signals generated by processor 1, such as for instance AS, an address validation signal, and FCO, a signal qualifying the address as an instruction address, or by a write command SBW on bus 5, coupled with an address validation signal SBAS on system bus. The operations performed in the two cases are respectively shown in Fig.3 and Fig.4.

In figure 3 cache 8 steps from an initial state IDLE (block 100) to a first active state 101 owing to external signals AS,FCO,NHIT.

When in this state, sequencer 18 checks if signal HIT1 is asserted or not.

If HIT1 is deasserted, this means that the address received on channel 11 through multiplexer 20 is not greater than or equal to the one stored in register 21, nor it is lesser than the one stored in register 22.

This condition is for instance the one which occurs after an initialization which resets registers 21 and 22.

If HIT1 is deasserted, the sequencer 18 loads the address present on channel 11 in registers 21 and 22 by means of commands LD1,LD2.

It may be noted that this operation does not change the state of HIT1 signal.

The code DIF generated by subtractor 31 is, in this example, 000 and signals that the address stored in the two registers 21,22 differs for an amount zero.

Therefore a plurality of blocks may be fetched from working memory and loaded in buffer 19.

The sequencer 18 further provides to request access to the system bus 5, by setting a suitable flip flop indicating that a bus request BRQ is pending (block 102) and steps to a bus request and arbitration state 103, waiting to receive access.

If during such wait, some write operation occurs on the system bus, as indicated by SBW and SBAS asserted, sequencer 18 exits from state 103 and steps to a state 104 which will be considered in the following.

Once access to the bus 5 is obtained, as it may be indicated, for example, by a signal BGRANT asserted, sequencer 18 steps in a state 105 and controls a working memory read operation, in burst mode, by asserting a signal SBRBURST, a code NBURST indicating the number of blocks to be read (in the example NBURST is the complement to 4 of code DIF) and by resetting the pending request indicator flip flop (signal RSBRQ).

When in this state, the gates 9 are enabled towards the system bus by a signal EN2 and gates 35 are enabled by signal NBW, so that the address stored in register 22 is transferred over the system bus 5.

The address so transferred coincide with the block address received through channel 11.

Cache 8 is preset to receive the requested information by signal EN which enables gates 10.

After a certain time interval, the cache 8 receives a first information block, accompanied by a validation signal DVAL.

On receipt of such signal, the arbitrator 18 generates signal LD and loads the information block in the register, among registers 24,25,26, 27, which is selected by code SC.

At the same time it asserts signal INCR causing the counter register 22 to increment.

Upon incrementation, register 22 selects another register, among registers 24,25,26,27, as destination of a new information block when it will be received.

Owing to such incrementation, the comparing unit 23 asserts HIT1. As a consequence, if AS is asserted and HIT is deasserted, the sequencer 18 generates signal EN1 enabling multiplexer 28 to transfer the requested information block on channel 14 accompanied by a validation signal DTACK, which is sent through a lead 15 to both processor 1 and the cache 7 (Fig. 1).

The block is received by the requesting processor 1 (which deasserts AS) and at the same time is loaded in cache 7, for possible subsequent use.

Sequencer 18 does not limit itself to fetch an instruction block, but checks if the output of subtractor 31 indicates a difference equal to four, say the buffer capacity.

In the negative case, the sequencer remains in state 103 and reenters in the flow already described at node 107, thus repeating the buffer 19 loading operation and counter 22 incrementation until DIF code indicates a value equal to 4.

On the occurrence of this event, the burst mode read operations end and the sequencer 18 returns to the state 100 (IDLE).

It may be noted that in the course of the buffer loading, as previously indicated, multiplexer 28 is disabled if signal AS is deasserted, that is if processor 1 does not need a new instruction contained in one of the subsequent blocks, stored in buffer 19.

These blocks are not transferred to cache 7 unless they are requested by processor 1.

It results from the above described flow that processor 1 and cache 7 receive the block containing the requested instruction as soon as it becomes available, without waiting for completion of the burst mode read operation.

Therefore the information latency time is minimized and the cache 7 is loaded with an information block which has been used at least one time. It may also be noted that during a burst mode read operation, if processor 1 asserts again signals AS and FCO to request an instruction in a block which has not been loaded in cache 7 but has been already loaded in buffer 19 (signals NHIT and HIT1 asserted, block 106), the information block containing the requested instruction is sent to the requesting processor 1 and at the same time is loaded in cache 7, without need to wait for completion of the burst mode read operation (block 106B). In other words buffer 19 can be simultaneosly read and written. The flow diagram of Fig.3 is now referenced to consider the operation of cache 8 in case the processor 1 requests an instruction missing from cache 7 but contained in buffer 19.

In this case, sequencer 18 steps to state 101, but being the signal HIT1 asserted, sequencer 18 asserts EN1 and DTACK and the requested block is immediately transferred to processor 1 and to cache 7.

The selection of the buffer 19 register storing the block is performed by the address present on channel 11 and transferred through multiplexer 20 to the selection input of multiplexer 28.

Sequencer 18 further asserts signal LD1 and loads the address at the output of multiplexer 20 in register 21.

Once this operation is performed the sequencer 18 checks if due to such operation the code DIF in output from subtractor 31 indicates a difference lesser than or equal to two (block 110).

In the affirmative case, sequencer 18 steps from state 101 to state 103.

Therefore a burst mode read operation requesting at least two blocks is performed.

The blocks are loaded in buffer 19.

In this case the operation is completely transparent to processor 1 and cache 7.

In the negative case (DIF > 2) sequencer 18 steps from state 101 to the IDLE state 100.

Two other cases need now to be considered:
A) Instruction request by processor 1 with HIT in cache 7.
B) Write operation occurring on the system bus.

In case A) the cache 7 provides the instruction and cache 8 remains inactive.

In case B) cache 7 and cache 8 must check that the write operation on the system bus does not modify some information in a block which may be contained either in cache 7 or cache 8 or both.

Therefore, due to signals SBW,SBAS asserted on system bus, sequencer 18 steps to state 104, either from state 100 or from state 103 (Fig.3).

When in state 104, sequencer 18 asserts signal BW which controls multiplexer 20 and inhibits gates 35 so that the comparing unit 23 checks if the address on system bus is related to a block stored in buffer 19.

If signal HIT1 becomes asserted, sequencer 18 generates reset signals (RSIPBL,RSIPBP) which are directed to register 21,22 (signal RS of fig. 2) and steps to IDLE state 100.

From state 100 sequencer 18 steps immediately to state 101 if a concurrent processor request has arised and signals AS,FCO,NHIT are pending (Fig. 3).

When in state 104, if signal HIT1 is deasserted, sequencer 18 checks the pending request status BRQ, and if this condition is true, on the occurrence of the condition BGRANT, steps to state 105 of Fig.3.

If the condition BRQ is false, sequencer 18 steps to state 100. The preceding description relates to a preferred embodiment of the invention and several changes can be made.

In particular, even if the description is related to a tandem cache memory specifically devoted to store instructions, it is also possible to implement a tandem cache memory where a cache such as cache 7 may be intended for storing both instructions and data and a cache such 8 is intended for storing instructions only.

It is also possible to implement a tandem cache memory in which a cache for independent blocks of data and instructions is coupled to a pair of caches buffering sequential blocks, each of the caches of the pair being functionally equivalent to the cache 8 already described but intended for storing blocks of instructions and data blocks respectively.

## Claims

1. Cache memory system (2) comprising:
- a first cache (7) for storing information blocks and having an address input (11), an information input/output (14) and a signal output (12) for signaling with a signal HIT respectively asserted and desserted if an information referenced by an address received at said address input (11) is stored in said first cache or not, said first cache (7) outputing said referenced information at said information input/output (14) on assertion of said HIT signal,
- a second cache (8) for storing information blocks referenced by subsequent ordered addresses and having an address input (11) connected to said address input (11) of said first cache (7), an address output (16), an information input (17), an information output (14) connected to the information input/output (14) of said first cache (7) and an input (12) for receiving said HIT signal from said first cache (7),
said second cache (8) comprising logical means (18,21,22,23), triggered by said signal HIT being deasserted, for checking if an information referenced by an address received at said address input (11) is stored in said second cache (8) or not stored and,
if such information is not stored, said logical means (18) requesting to a working memory (3) and loading in said second cache (8) a plurality of information blocks having subsequent addresses of increasing order,the lesser of said subsequent addresses referencing a first block containing the information referenced by said address received at said address input (11), said logical means (18) transferring said first block to said information output (14) and instructing said first cache (7) to store said first block, as soon as it is received from said working memory (3),
without waiting to have entirely received said plurality of information blocks and,
if such information is stored, said logical means (18) enabling said information output (14) to output an information block containing the information referenced by said address received at said address input (11) and instructing said first cache (7) to store said output information block, and said logical means (18,23) further checking if the address referencing said output block differs from the higher of the addresses of the blocks stored in said second cache by less than a predetermined amount and, in the affirmative, requesting to said working memory (3) and loading in said second cache (8) a plurality of information blocks having ordered addresses next following said higher address.

2. Cache memory system as in claim 1, where said second cache (8) comprises a plurality of registers (24,25,26,27), each for storing an information block, and said logical means (18,21,22,23) comprises,
a first register (21) for storing the address of a block stored in said second cache having the lesser among the addresses of the blocks stored in said second cache (8),
a second register (22) for storing the address of a block next following the highest of the addresses of the blocks stored in said second cache (8), and comparison means (23) for checking if an address received at said address input (11) is higher than or equal to the address stored in said first register (21) and lesser than the address stored in said second register (22) and, in the affirmative, said comparison means (23) generating a signal HIT1 asserted, said logical means (18), on the occurrence of said signal HIT1 asserted, enabling one in said plurality of registers (24,25,26,27) to output an information block stored therein, said one register being selected by a field of the address received at said address input (11).

3. Cache memory system as in claim 1 where said second cache (8) comprises a buffer (19) which can be simultaneously read and written.

## Patentansprüche

1. Cache-Speichersystem (2) mit folgenden Merkmalen:
einem ersten Cache (7) zum Speichern von Informationsblöcken, der einen Adresseneingang (11), einen Informationen-Eingang/Ausgang (14) und einen Signal-Ausgang (12) zum Signalisieren mit einem aktivierten bzw. deaktivierten Signal HIT aufweist, wenn Informationen, auf die durch eine Adresse verwiesen wird, die an dem Adresseneingang (11) empfangen wird, in dem ersten Cache gespeichert sind oder nicht, wobei der erste Cache (7) die Informationen, auf die verwiesen wird, an dem Informationen-Eingang/Ausgang (14) bei einer Aktivierung des Signals HIT ausgibt;
einem zweiten Cache (8) zum Speichern von Informationsblöcken, auf die von aufeinanderfolgenden geordneten Adressen verwiesen wird, der einen Adresseneingang (11), der mit dem Adresseneingang (11) des ersten Cache (7) verbunden ist, einen Adressenausgang (16), einen Informationeneingang (17), einen Informationenausgang (14), der mit dem Informationen-Eingang/Ausgang (14) des ersten Cache (7) verbunden ist, und einen Eingang (12) zum Empfangen des Signals HIT von dem ersten Cache (7) aufweist;
wobei der zweite Cache (8) eine Logikeinrichtung (18, 21, 22, 23), die durch das deaktivierte Signal HIT getriggert wird, zum Überprüfen aufweist, ob Informationen, auf die von einer an dem Adresseneingang (11) empfangenen Adresse verwiesen wird, in dem zweiten Cache (8) gespeichert oder nicht gespeichert sind;
wobei, wenn solche Informationen nicht gespeichert sind, die Logikeinrichtung (18) zu einem Arbeitsspeicher (3) anfordert und eine Mehrzahl von Informationsblöcken mit aufeinanderfolgenden Adressen ansteigender Reihenfolge in den zweiten Cache (8) lädt, wobei die kleinere der aufeinanderfolgenden Adressen auf einen ersten Block verweist, der Informationen enthält, auf die von der Adresse verwiesen wird, die an dem Adresseneingang (11) empfangen wird, wobei die Logikeinrichtung (18) den ersten Block zu dem Informationenausgang (14) überträgt und den ersten Cache (7) anweist, um den ersten Block zu speichern, sobald derselbe von dem Arbeitsspeicher (3) empfangen ist, und zwar ohne darauf zu warten, die Mehrzahl von Informationsblöcken vollständig empfangen zu haben,
wobei, wenn solche Informationen gespeichert sind, die Logikeinrichtung (18) den Informationenausgang (14) freigibt, um einen Informationenblock auszugeben, der die Informationen enthält, auf die von der Adresse, die an dem Adresseneingang (11) empfangen wird, verwiesen wird, und den ersten Cache (7) anweist, um den ausgegebenen Informationenblock zu speichern, und wobei die Logikeinrichtung (18, 23) ferner überprüft, ob sich die Adresse, die auf den ausgegebenen Block verweist, von der höheren der Adressen der Blöcke, die in dem zweiten Cache gespeichert sind, um weniger als einen vorbestimmten Betrag unterscheidet, und, wenn dies zutrifft, zu dem Arbeitsspeicher (3) anfordert und in den zweiten Cache (8) eine Mehrzahl von Informationsblöcken lädt, welche geordnete Adressen haben, die der höheren Adresse als nächstes folgen.

2. Cache-Speichersystem gemäß Anspruch 1, bei dem der zweite Cache (8) eine Mehrzahl von Registern (24, 25, 26, 27) aufweist, wobei jedes zum Speichern eines Informationsblocks vorhanden ist, wobei die Logikeinrichtung (18, 21, 22, 23) folgende Merkmale aufweist:
ein erstes Register (21) zum Speichern der Adresse eines Blocks, der in dem zweiten Block gespeichert ist, der die kleinere unter den Adressen der Blöcke, die in dem zweiten Cache (8) gespeichert sind, aufweist;
ein zweites Register (22) zum Speichern der Adresse eines Blocks, der als nächstes der höchsten der Adressen der Blöcke, die in dem zweiten Cache (8) gespeichert sind, folgt; und
eine Vergleichseinrichtung (23) zum Überprüfen, ob eine an dem Adresseneingang (11) empfangene Adresse höher oder gleich der in dem ersten Register (21) gespeicherten Adresse und kleiner als die in dem zweiten Register (22) gespeicherte Adresse ist, und wobei, wenn dies zutrifft, die Vergleichseinrichtung (23) ein aktiviertes Signal HIT1 erzeugt, wobei die Logikeinrichtung (18) beim Auftreten des aktivierten Signals HIT1 eines der Mehrzahl von Registern (24, 25, 26, 27) freigibt, um einen in demselben gespeicherten Informationsblock auszugeben, wobei das eine Register durch ein Feld der Adresse, die an dem Adresseneingang (11) empfangen wird, ausgewählt wird.

3. Cache-Speichersystem gemäß Anspruch 1, bei dem der zweite Cache (8) einen Puffer (19) aufweist, der gleichzeitig gelesen und beschrieben werden kann.

## Revendications

1. Système (2) d'antémémoire comprenant :
- une première antémémoire (7) pour stocker des blocs d'informations et ayant une entrée (11) d'adresse, une entrée/sortie (14) d'information, et une sortie (12) de signal pour signaler à l'aide d'un signal HIT respectivement validé et invalidé, si une information référencée par une adresse reçue à ladite entrée (11) d'adresse, est stockée dans ladite première antémémoire ou non, ladite première antémémoire (7) fournissant en sortie ladite information de référence à ladite entrée/sortie (14) d'information lors de la validation dudit signal HIT,
- une seconde antémémoire (8) pour stocker des blocs d'informations référencés par des adresses ordonnées consécutives et ayant une entrée (11) d'adresse connectée à ladite entrée (11) d'adresse de ladite première antémémoire (7), une sortie (16) d'adresse, une entrée (17) d'information, une sortie (14) d'information connectée à l'entrée/sortie (14) d'information de ladite première antémémoire (7) et une entrée (12) pour recevoir ledit signal HIT de ladite première antémémoire (7),
ladite seconde antémémoire (8) comprenant des moyens (18,21,22,23) logiques déclenchés par ledit signal HIT lorsqu'il est invalidé, pour vérifier si une information référencée par une adresse reçue à ladite entrée (11) d'adresse est stockée dans ladite seconde antémémoire (8) ou n'est pas stockée, et
si cette information n'est pas stockée, lesdits moyens (18) logiques demandant à une mémoire (3) de travail et chargeant dans ladite seconde antémémoire (8) un ensemble de blocs d'informations ayant des adresses consécutives d'ordre croissant, la plus basses desdites adresses consécutives référençant un premier bloc contenant l'information référencée par ladite adresse reçue à ladite entrée (11) d'adresse, lesdits moyens (18) logiques transférant ledit premier bloc à ladite sortie (14) d'information et ordonnant à ladite première antémémoire (7) de stocker ledit premier bloc, dès qu'il est reçu de ladite mémoire (3) de travail,
sans attendre d'avoir entièrement reçu ledit ensemble de blocs d'informations et,
si cette information est stockée, lesdits moyens (18) logiques permettant à ladite sortie (14) d'information de fournir en sortie un bloc d'informations contenant l'information référencée par ladite adresse reçue à ladite entrée (11) d'adresse et ordonnant à ladite première antémémoire (7) de stocker ledit bloc d'informations de sortie, et lesdits moyens (18,23) logiques vérifiant en outre si l'adresse référençant ledit bloc de sortie est différente de la plus haute des adresses des blocs stockés dans ladite seconde antémémoire, cette différence étant inférieure à une quantité prédéterminée, et, dans l'affirmative, demandant à ladite mémoire (3) de travail et chargeant dans ladite seconde antémémoire (8) un ensemble de blocs d'informations ayant des adresses ordonnées suivant immédiatement ladite adresse supérieure.

2. Système d'antémémoire selon la revendication 1, dans lequel ladite seconde antémémoire (8) comprend un ensemble de registres (24,25,26,27), chacun destiné à stocker un bloc d'informations, et lesdits moyens (18,21,22,23) logiques comprennent
un premier registre (21) pour stocker l'adresse d'un bloc stocké dans ladite seconde antémémoire ayant la plus basse des adresses des blocs stockés dans ladite seconde antémémoire (8),
un second registre (22) pour stocker l'adresse d'un bloc suivant immédiatement la plus haute des adresses des blocs stockés dans ladite seconde antémémoire (8), et
des moyens (23) de comparaison pour vérifier si une adresse reçue à ladité entrée (11) d'adresse est plus haute ou égale à l'adresse stockée dans ledit premier registre (21), et est plus basse que l'adresse stockée dans ledit seconde registre (22), et, dans l'affirmative, lesdits moyens (23) de comparaison générant un signal HIT 1 validé, lesdits moyens (18) logiques, lors de l'apparition dudit signal HIT 1 validé, permettant à l'un dudit ensemble de registres (24,25,26,27) de fournir en sortie un bloc d'informations stocké dans celui-ci, ledit registre étant sélectionné par un champ de l'adresse reçue à ladite entrée (11) d'adresse.

3. Système d'antémémoire selon la revendication 1, dans lequel ladite seconde antémémoire (8) comprend une mémoire (19) tampon qui peut faire l'objet d'une lecture et d'une écriture simultanées.
